# EUROPÄISCHE PATENTSCHRIFT

(11) **EP 2 886 508 B1**
(45) Veröffentlichungstag und Bekanntmachung des Hinweises auf die Patenterteilung: **13.04.2016**
(21) Anmeldenummer: 13405141.6
(22) Anmeldetag: 20.12.2013
(51) Int. Cl.: B67B 7/18

(54) **Betätigungsvorrichtung für Schraubdeckel**
Actuating device for screw-on cap
Dispositif d'actionnement pour couvercle à vis

(43) Veröffentlichungstag der Anmeldung: 24.06.2015
(73) Patentinhaber: CTC Analytics AG, 4222 Zwingen (CH)
(72) Erfinder: Zumbach, Melchior, 5600 Lenzburg (CH); Kernen, Roland, 4132 Muttenz (CH)
(74) Vertreter: Stäbler, Roman

(56) Entgegenhaltungen:
- EP-A2- 1 705 149
- DE-C1- 19 508 379
- US-A- 3 795 158
- US-A- 4 919 014
- US-B1- 7 383 753
- US-B1- 7 398 714
- US-B1- 8 028 816

## Beschreibung

### Technisches Gebiet

Die Erfindung betrifft eine Vorrichtung zum Betätigen eines Schraubdeckels eines Behälters, umfassend eine erste Haltevorrichtung zum Halten des Schraubdeckels, sowie einen Antrieb zum Betätigen der ersten Haltevorrichtung.

### Stand der Technik

Vorrichtungen zum Betätigen eines Schraubdeckels eines Behälters sind dem Fachmann weitum bekannt und dienen zum Beispiel in der chemischen Analytik zum Probenhandling. Behältern, wie Vials oder dergleichen, können mit solchen Vorrichtungen zur Betätigung eines Schraubdeckels mit einem Schraubdeckel verschraubt werden respektive kann ein Schraubdeckel entnommen werden.

Die EP 0 736 481 B1 (Roche) betrifft eine Vorrichtung zum Abdrehen von Verschlüssen von Probengefässen. Die Reagenzgefässe werden dazu zwischen Haltebacken eingespannt, welche so an Stellbacken befestigt sind, sodass sie gegenüber der Achse des Gefässes verkippt werden können. Die Stellbacken sind über einen Spindeltrieb bewegbar, welcher über einen einzelnen Motor betrieben ist. Eine Verschlusshaltevorrichtung ist mit Halteelementen ausgestattet, welche eine Mehrzahl von Greifbacken besitzt. Die Greifbacken können durch einen Antrieb mit Druckzylinder oder Spindelantrieb bewegt werden. Die Verschlusshaltevorrichtung befindet sich an einer Bewegungsvorrichtung, die die Verschlusshaltevorrichtung sowohl parallel zur Gefässachse bewegen kann, als auch eine Rotation um die Gefässachse ermöglicht. Dies wird durch eine motorisch angetriebene Schraube und einer Mutter erreicht. Die Mutter kann mit einem Stift so arretiert werden, dass das Gefäss gedreht werden kann.

Die Vorrichtung umfasst ein linkes und eine rechtes Stativbein und dazwischen ein Transportband für die Probengefässe. Ein Greifer mit Greifbacken zur Entnahme von Gefässen aus einem Gestell ist über eine Spindel in der Höhe verfahrbar, so dass ein Verschluss über ein durch die Haltebacken gehaltenes Gefäss geführt werden kann. Die über einen Motor mit Zahnriemen angetriebene Verschlusshaltevorrichtung umfasst eine Mutter mit Vertiefungen, in welche ein Stössel zur Verdrehsicherung eingeführt werden kann. Der Stössel wird über einen Hubmagneten betätigt.

Für die Gefässhaltevorrichtung wird ein eigener Motor eingesetzt, der seine Drehbewegung über einen Zahnriemen auf die beiden Gefässhaltebacken überträgt. Die Verschlüsse können nach dem Entfernen in eine unter den Verschluss bewegte Auffangvorrichtung fallen gelassen werden.

Die EP 0 972 744 A2 (Bayer) betrifft einen automatischen Decapper zum Öffnen von verschiedenen Verschlüssen, insbesondere Dreh- und Steckverschlüsse von Reagenzgläsern verschiedener Grössen für die Anwendung bei Analysengeräten. Die Vorrichtung umfasst obere Greifer, welche den Deckel ortsfest halten und untere Greifer sowie Mittel zum Rotieren und Translatieren der unteren Greifer weg vom oberen Greifer. Der obere Greifer kann an einem schwenkbaren Arm montiert sein und umfasst ein Backenfutter. Der untere Greifer umfasst eine Schraube zur Höhenverstellung der Greifeinrichtung. Der Antrieb erfolgt durch einen Motor und über einen Zahnriemenantrieb. Der untere Greifer umfasst zwei federbeaufschlagte und motorisch betätigbare Haltearme.

Die US 3795158 offenbart eine Vorrichtung zum Betätigen eines Schraubdeckels gemäß dem Oberbegriff des Anspruchs 1.

Die bekannten Vorrichtungen zum Betätigen von Schraubdeckeln haben den Nachteil, dass sie komplex aufgebaut und damit teuer in der Herstellung sind.

### Darstellung der Erfindung

Aufgabe der Erfindung ist es, eine dem eingangs genannten technischen Gebiets zugehörende Vorrichtung zum Betätigen von Schraubdeckeln zu schaffen, welche kostengünstig herstellbar ist.

Die Lösung der Aufgabe ist durch eine Anordnung gemäß Anspruch 5 definiert. Dementsprechend umfasst die erste Haltevorrichtung eine Kopplungsvorrichtung zum Ankoppeln eines externen Antriebs, womit die erste Haltevorrichtung mittels des externen Antriebs verfahrbar ist.

Dadurch, dass die Vorrichtung keinen eigenen Antrieb zum Verfahren der ersten Haltevorrichtung benötigt, kann die Vorrichtung besonders einfach aufgebaut werden. Es reicht damit aus, wenn die erste Haltevorrichtung zum Beispiel über Linearführungen oder dergleichen verfahrbar ausgebildet ist. Erfindungsgemäss umfasst also die Vorrichtung keinen eigenen Antrieb zum Verfahren der ersten Haltevorrichtung.

Der externe Antrieb ist vorzugsweise durch eine nebengeordnete Vorrichtung umfasst, welche bereits über die notwendige Einrichtung für das Verfahren der Haltevorrichtung verfügt. Eine solche nebengeordnete Vorrichtung kann zum Beispiel als Roboter für den Behältertransport ausgebildet sein. Der Roboter kann damit derart ausgebildet sein, dass zusätzlich auch Behälter ergriffen und transportiert werden können. Dies ist von besonderem Vorteil, da typischerweise ohnehin eine Transportvorrichtung für die Behälter zum Transportieren der Behälter von einem Rack oder dergleichen zur Vorrichtung und umgekehrt, vorgesehen ist.

Weiter kann als externer Antrieb auch ein Roboter eingesetzt werden, welcher eine Spritze oder eine SPME-Vorrichtung verfährt, das heisst, ein Roboter, welcher zusätzlich zu den vorrichtungsspezifischen Verfahrensschritten auch weitere Funktionen übernehmen kann. Der Roboter kann damit auch derart ausgebildet sein, dass mehrere Funktionen zusammen übernommen werden können. Damit können bestehende Ressourcen besser ausgenutzt werden, so dass die erfindungsgemässe Vorrichtung besonders kostengünstig und einfach aufgebaut werden kann. Siehe dazu weiter unten, in Bezug auf die Anordnung umfassend eine Vorrichtung und einen externen Antrieb.

Vorzugsweise ist die erste Haltevorrichtung in einer Ebene verfahrbar. Vorzugsweise handelt es sich bei der Ebene um eine, zu einer Rotationsachse eines Behälters parallelen Ebene, insbesondere um eine vertikale Ebene. Damit wird ermöglicht, dass mit der Vorrichtung über die verfahrbare Haltevorrichtung ein Behälter am Schraubdeckel ergriffen werden kann, sofern sich dieser in besagter Ebene befinde. Im Verfahren kann ein Roboter vorgesehen sein, welcher den Behälter von einer Aufbewahrungsstation, zum Beispiel einem Rack, in diese Ebene transferiert. Dadurch, dass die erste Haltevorrichtung in der Ebene verfahrbar ist, kann der Raum über dem Behälter zum Beispiel für eine Transportvorrichtung freigegeben werden, so dass ein Behälter von oben derart in der Ebene positioniert werden kann, dass anschliessend die erste Haltevorrichtung über den Behälter verfahren und der Deckel ergriffen werden kann.

In Varianten kann die Haltevorrichtung auch lediglich in einer z-Richtung verfahrbar sein, so dass damit lediglich eine Behälterhöhe berücksichtigt werden kann.

Vorzugsweise ist die erste Haltevorrichtung entlang einer ersten Achse verfahrbar und um eine zweite Achse schwenkbar. Prinzipiell können beide Bewegungen, das heisst, sowohl das Verfahren als auch das Verschwenken in derselben Ebene stattfinden, wobei in diesem Fall die Ebene vorzugsweise vertikal, respektive parallel zu einer Behälterachse orientiert ist. Damit der Behälter, zum Beispiel durch eine Transporteinrichtung positioniert werden kann, kann die erste Haltevorrichtung aus dem Transportweg geschwenkt werden, zum Beispiel um eine horizontale Achse. Danach kann der Behälter positioniert werden, worauf die erste Haltevorrichtung wieder eingeschwenkt wird, so dass eine Deckelaufnahme der ersten Haltevorrichtung koaxial zum Schraubdeckel des Behälters orientiert ist. Um den Schraubdeckel zu ergreifen, kann anschliessend die erste Haltevorrichtung in Richtung des Schraubdeckels verfahren werden.

Besonders bevorzugt ist aber die erste Achse senkrecht zur zweiten Achse orientiert. Die erste Achse kann zum Beispiel vertikal orientiert sein, so dass damit die Höhe der ersten Haltevorrichtung eingestellt werden kann. Die erste Haltevorrichtung kann in diesem Fall um eine vertikale Achse verschwenkbar ausgebildet sein, so dass eine räumliche Bewegung der ersten Haltevorrichtung möglich ist. Als überlagerte Bewegung kann damit die erste Haltevorrichtung entlang eines Bereichs eines Zylindermantels bewegt werden. Im Unterschied zur obig beschriebenen Ausführungsform wird die erste Haltevorrichtung für die Positionierung des Behälters seitlich, das heisst, in einer zur Behälterachse senkrechten Ebene, ausgeschwenkt. Nach der Positionierung des Behälters wird die erste Haltevorrichtung wieder eingeschwenkt, so dass die Deckelaufnahme der ersten Haltevorrichtung koaxial zum Schraubdeckel des Behälters orientiert ist. Um den Schraubdeckel zu ergreifen, kann anschliessend die erste Haltevorrichtung in Richtung des Schraubdeckels verfahren werden.

Die Schwenkachse hat den Vorteil, dass sie im Allgemeinen kostengünstiger herstellbar ist als eine Linearführung. Damit können die Gesamtkosten der Vorrichtung weiter verringert werden.

In Varianten können zwei rechtwinklig zueinander stehende Linearführungen vorgesehen sein, womit die erste Haltevorrichtung in einer damit aufgespannten Ebene verfahren werden kann. Weiter kann die erste Haltevorrichtung auch derart ausgebildet sein, dass ein räumliches Verfahren möglich ist.

Vorzugsweise umfasst die Vorrichtung eine zweite Haltevorrichtung zum Ergreifen des Behälters. Besonders bevorzugt wird während der Betätigung des Schraubdeckels der Behälter durch die zweite Haltevorrichtung gehalten. Damit kann der Behälter während des Betätigens des Drehverschlusses gehalten werden, so dass der Drehverschluss respektive Schraubdeckel auch mit grösserem Drehmoment beaufschlagt werden kann - dies ist sowohl zum Öffnen als auch zum Schliessen des Drehverschlusses von Vorteil. Die zweite Haltevorrichtung kann auf verschiedenste Arten ausgebildet sein. So kann bei geeigneter Flaschenform ein Formschluss vorgesehen sein. Bevorzugt wird der Behälter aber mittels Kraftschluss ergriffen. Dies hat den Vorteil, dass die zweite Haltevorrichtung derart ausgebildet werden kann, dass sie unabhängig von der Flaschenform funktioniert. In einer besonders bevorzugten Ausführungsform wird mit der zweiten Haltevorrichtung der Behälter festgeklemmt, um eine Drehung des Behälters während dem Betätigen des Schraubdeckels zu verhindern. Die zweite Haltevorrichtung ist damit als aktiv betätigbare Haltevorrichtung ausgebildet.

Alternativ kann auf die zweite Haltevorrichtung auch verzichtet werden, wobei zum Halten des Behälters passive Mittel vorgesehen sind. Letztere können zum Beispiel als eine Auflage mit hohem Reibwiderstand, zum Beispiel als Gummimatte, vorgesehen sein. Weiter kann diese auch einen konische Öffnung umfassen, welche innwändig mit einer Schicht mit erhöhter Haftreibung versehen ist. Der Konus kann derart ausgebildet sein, dass verschiedene Behältergrössen aufgenommen werden können, dazu kann dieser auch einzelne Kegelstumpfabschnitte umfassen, welche zu einem stufigen Trichter zusammengesetzt oder nebeneinander angeordnet sind.

Vorzugsweise sind die erste und/oder die zweite Haltevorrichtung als Backenfutter, und insbesondere zur Aufnahme von Schraubdeckeln respektive Behälter unterschiedlicher Durchmesser, ausgebildet. Damit wird eine konstruktiv einfache und kostengünstige erste respektive zweite Haltevorrichtung erreicht. Insbesondere können mit Backenfutter in einfacher Weise Behälter respektive Schraubdeckel mit unterschiedlichen Durchmessern ergriffen werden. Durch die z-Achsen-Verfahrbarkeit wird damit eine besonders vielfältig einsetzbare Vorrichtung zum Betätigen von Schraubdeckeln geschaffen, da nicht nur die Durchmesser, sondern auch die Höhen der Behälter variieren können. Die Behälter können zum Beispiel als Vials vorliegen und von 2mL bis 40mL Volumen fassen. Natürlich können auch kleinere, mit einem Fassungsvermögen von weniger als 2mL oder grössere, mit einem Fassungsvermögen von mehr als 40mL vorgesehen sein. Dies hängt von der Dimensionierung der Backenfutter und dem maximalen Verfahrweg der ersten Haltevorrichtung in der z-Richtung ab.

In einer besonders bevorzugten Ausführungsform handelt es sich bei einem oder bei beiden Backenfutter um ein Dreibackenfutter oder ein Vierbackenfutter.

Dem Fachmann sind zu den Backenfutter Varianten, wie zum Beispiel Klemmzangen oder dergleichen, bekannt. Insbesondere kann das Backenfutter auch als Zweibackenfutter oder als Backenfutter mit mehr als vier Backen ausgebildet sein.

Bevorzugt sind die erste und/oder die zweite Haltevorrichtung selbsthemmend. Damit wird die Steuerung der Vorrichtung vereinfacht, da nach dem Ergreifen des Schraubdeckels respektive des Behälters die Haltekraft nicht weiter Überwacht werden muss. Insbesondere kann damit eine Haltekraft präzise eingestellt werden. Dies kann insbesondere bei fragilen Behältern, zum Beispiel bei dünnwandigen Glasvials, aber auch bei instabilen Schraubdeckeln, relevant sein. Weiter kann damit, nach dem Ergreifen des Schraubdeckels, der für das Ergreifen des Schraubdeckels vorgesehene Antrieb für eine oder mehrere andere Anwendungen vorgesehen sein, insbesondere zur Rotation der ersten Haltevorrichtung und damit zum Auf- oder Zuschrauben des Schraubdeckels. Damit kann die Vorrichtung weiter vereinfacht werden (siehe weiter unten).

Die beiden respektive eine der beiden Haltevorrichtungen kann auch nicht selbsthemmend ausgebildet sein. In diesem Fall kann eine separate Arretierungsvorrichtung für die Haltevorrichtung vorgesehen sein.

Bevorzugt umfasst die zweite Haltevorrichtung eine zentrale Öffnung, durch welche ein durch die zweite Haltevorrichtung gehaltener Behälter und/oder Schraubdeckel fallen gelassen werden kann. Unterhalb dieser zentralen Öffnung kann ein Auffanggefäss vorgesehen sein, in welchem die Behälter, welche fallen gelassen wurden, aufgefangen werden. Diese Ausbildung ist insbesondere dann von Vorteil, wenn durch die Vorrichtung erkannt werden kann, dass ein Behälter fehlerhaft ist. Dies kann zum Beispiel bei einem verklemmten Drehverschluss vorliegen, was zum Beispiel durch ein Überschreiten einer Drehmomentgrenze des Antriebs erkannt werden kann. In diesem Fall kann der Behälter einfach durch die Öffnung der zweiten Haltevorrichtung fallen gelassen werden, womit ein effizientes Verfahren beim Vorliegen von Ausschusswahren ermöglicht wird.

In Varianten kann auf die zentrale Öffnung auch verzichtet werden. In diesem Fall würden fehlerhafte Behälter zum Beispiel durch einen Roboter weggeführt.

Die Anordnung umfasst vorzugsweise eine Vorrichtung zum Betätigen eines Schraubdeckels eines Behälters, mit einer ersten Haltevorrichtung zum Halten des Schraubdeckels, sowie einem Antrieb zum Betätigen der ersten Haltevorrichtung, wobei die erste Haltevorrichtung eine Kopplungsvorrichtung zum Ankoppeln eines externen Antriebs umfasst, womit die erste Haltevorrichtung mittels des externen Antriebs verfahrbar ist. Weiter umfasst die Anordnung einen externen Antrieb, insbesondere einen Roboter zum Verfahren des ersten Backenfutters.

In einem Verfahren zum Betätigen eines Schraubdeckels eines Behälters gemäß Anspruch 19 unter Verwendung einer obig beschriebenen Anordnung, wird mit einem externen Antrieb, insbesondere einem Roboter eine erste Haltevorrichtung verfahren und anschliessend der Schraubdeckel durch die erste Haltevorrichtung ergriffen und betätigt.

In dieser Kombination kann die Vorrichtung mit genau einem Antrieb für die Rotation und das Betätigen der Haltevorrichtung ausgestattet sein, womit eine besonders kostengünstige Vorrichtung erreicht wird (siehe unten). Insbesondere kann damit auf einen vorrichtungseigenen Antrieb zum Verfahren der Haltevorrichtung verzichtet werden. Der Roboter kann spezifisch für das Verfahren der Haltevorrichtung vorgesehen sein. Bevorzugt umfasst der Roboter aber weitere Aufgaben, wie zum Beispiel das Entnehmen von Proben aus einem Behälter, zum Beispiel über eine Spritze oder eine SPME-Vorrichtung etc. Die Vorrichtung umfasst vorzugsweise eine horizontale und eine vertikale Linearführung, womit die Haltevorrichtung in der Ebene verfahrbar ist.

Vorzugsweise umfasst der externe Antrieb, insbesondere der Roboter ein Kopplungselement, insbesondere ein Greifelement zum Ergreifen und Verfahren der ersten Haltevorrichtung in der Ebene.

Die Kopplungseinrichtung kann auf verschiedenste Arten ausgebildet sein. Da die Haltevorrichtung in einer ersten Ausführungsform lediglich in einer Ebene verfahrbar ist, reicht es zum Beispiel aus, wenn die Haltevorrichtung mit einer zur Ebene rechtwinklig orientierten Öffnung verbunden ist, in welche ein entsprechend geformtes Gegenstück des externen Antriebs eingreifen kann. In diesem Fall erfolgt eine Kopplung besonders einfach, indem der externe Antrieb derart verfahren wird, dass das Gegenstück in die Öffnung der Haltevorrichtung einfährt. Anschliessend kann die Haltevorrichtung durch den externen Antrieb in der Ebene verfahren werden. Eine Öffnung kann dabei zum Beispiel als Bohrung und das Gegenstück als Zylinder oder die Öffnung kann als Schlitz und das Gegenstück als Platte ausgebildet sein. Dem Fachmann sind auch weitere Formen für die Öffnung und das Gegenstück bekannt. Insbesondere kann auch der externe Antrieb die Öffnung und die Haltevorrichtung das Gegenstück umfassen. Dem Fachmann ist weiter auch klar, dass nicht zwingend die Haltevorrichtung selbst die Öffnung respektive das Gegenstück umfassen muss, sondern dass ebenso ein anderes, zusammen mit der Haltevorrichtung verfahrbares und damit verbundenes Element eine solche Öffnung oder das Gegenstück umfassen kann.

Prinzipiell kann die erste Haltevorrichtung auch räumlich durch den externen Antrieb verfahrbar sein. Insbesondere, wie oben beschrieben, kann die erste Haltevorrichtung entlang eines Bereichs eines Zylindermantels verfahrbar sein. Zum Verbinden des externen Antriebs mit der ersten Haltevorrichtung kann in einer solchen Ausführungsform eine formschlüssige Kopplung vorgesehen sein. Die Kopplungseinrichtung kann dazu zum Beispiel einen Bajonettverschluss umfassen, diese Kopplung hat allerdings den Nachteil, dass eine Betätigung der Kopplungseinrichtung erforderlich ist, nämlich eine Drehung einer der beiden zylindrischen Teile nach dem Zusammenstecken derselben. Das räumliche Verfahren kann aber auch ohne eine Betätigung der Kopplungseinrichtung erreicht werden, wenn die Haltevorrichtung durch die Schwerkraft eine Ruhestellung in abgesenktem Zustand einnimmt. In diesem Fall kann der externe Antrieb zum Beispiel ein L-förmiges Element umfassen, welches von unten in eine entsprechende L-förmige Öffnung eingeführt werden kann. Ebenso kann die erste Haltevorrichtung mit einem nach unten ragenden Stift verbunden sein, welcher in eine entsprechend dimensionierte und mit einem Roboter verbundener Hülse aufgenommen werden kann. Dem Fachmann sind auch weitere Möglichkeiten bekannt.

Alternativ kann die Vorrichtung selbst einen Antrieb zum Verfahren der Haltevorrichtung umfassen. Wie bereits erwähnt, kann die Haltevorrichtung sowohl durch einen externen wie auch durch einen internen Antrieb entlang einer einzigen Achse (x-, y- oder z-Achse) oder auch räumlich verfahrbar sein. Die Vorrichtung kann auch dreh- oder schwenkbar verfahrbar sein. Der externe Antrieb kann auch kraftschlüssig mit der ersten Haltevorrichtung verbindbar sein, zum Beispiel mit einer Klemmvorrichtung oder dergleichen.

In einer weiteren Ausführungsform kann die erste Haltevorrichtung eine zentrale Öffnung umfassen, über welche ein Schraubdeckel, Behälter oder ein mit einem Schraubdeckel versehener Behälter eingeführt werden kann. Damit kann zum Beispiel ein offener Behälter oder ein offenes Vial effizient mit einem Schraubdeckel versehen werden. Insbesondere muss für das Verschrauben mit einem Schraubdeckel der Behälter beim Einsetzen in die Vorrichtung nicht bereits mit einem Schraubdeckel versehen sein, womit das Verfahren des Verschraubens effizienter und robuster ausgeführt werden kann. Um das Verfahren weiter zu optimieren, kann über der zentralen Öffnung der ersten Haltevorrichtung ein Vorrat an Schraubdeckeln, zum Beispiel in einer passenden Röhre oder dergleichen, vorgesehen sein, wobei zum Beispiel nach dem Verschrauben des letzten Schraubdeckels die Haltevorrichtung um eine Deckelhöhe angehoben wird, um den nächsten, durch die Schwerkraft nachgerutschten Schraubdeckel mit der Haltevorrichtung fest zu ergreifen. Anschliessend kann die Haltevorrichtung nach oben geführt werden, ohne dass vorrätige Deckel aus dem Rohr fallen.

In Varianten kann auf die zentrale Öffnung der ersten Haltevorrichtung auch verzichtet werden.

Vorzugsweise umfasst der externe Antrieb, insbesondere der Roboter eine Aufnahmevorrichtung zum Aufnehmen eines Behälters. Damit kann mit dem Roboter zusätzlich zum Verfahren der ersten Haltevorrichtung auch ein Behälter vorgängig in der zweiten Haltevorrichtung positioniert werden. Damit werden die Ressourcen optimal genutzt um eine möglichst kostengünstige Anordnung mit möglichst wenigen Antriebsmotoren zu erreichen.

In Varianten kann auf diese Funktion des Roboters auch verzichtet werden.

Bevorzugt umfasst die Aufnahmevorrichtung einen Magneten zum Aufnehmen des Behälters. Damit wird eine konstruktiv besonders einfache Aufnahmevorrichtung geschaffen. Der Magnet kann zum Beispiel als Dauermagnet ausgebildet sein, womit die Aufnahmevorrichtung weiter vereinfacht wird. Ebenso kann damit der Betrieb der Aufnahmevorrichtung einfach gehalten werden, da der Behälter ergriffen wird, sobald die Aufnahmevorrichtung hinreichend nahe am Behälter ist. Um den Behälter abzusetzen, kann dieser in eine Haltevorrichtung, zum Beispiel in die zweite Haltevorrichtung, eingesetzt werden, worauf der Magnet zum Beispiel durch eine seitliche Bewegung des Magneten, zum Beispiel in eine zur Einführrichtung des Behälters rechtwinklige Richtung, abgestreift werden kann oder indem die Haltevorrichtung den Behälter ergreift, so dass der Magnet auch nach oben, entgegen der Einführrichtung des Behälters, abgekoppelt werden kann.

Der Einsatz eines elektrisch steuerbaren Magneten kann von Vorteil sein, um den Behälter in beliebigen Lagen, insbesondere auch auf einer ebenen Oberfläche abstellen zu können. Weiter hat ein Elektromagnet den Vorteil, dass ein versehentliches Aufnehmen eines Behälters oder eines sonstigen metallischen Gegenstands in der Peripherie der Aufnahmevorrichtung, wie zum Beispiel eine Büroklammer oder dergleichen, vermieden werden kann.

Damit ein Behälter mit der einen Magneten umfassenden Aufnahmevorrichtung ergriffen werden kann, weist der Behälter zumindest einen magnetischen Bereich auf. Dieser kann zum Beispiel als ferromagnetischer Deckel vorliegen. Weiter kann ein Deckel auch im Wesentlichen aus nicht-ferromagnetischem Material hergestellt sein, welches jedoch ferromagnetische Einschlüsse aufweist - zum Beispiel ein Kunststoff mit ferromagnetischen Metallsplitter-Einschlüssen. Prinzipiell kann auch der Behälter solche Einschlüsse aufweisen. Der Behälter kann auch mit einem magnetischen Kopplungsteil ausgestattet sein, zum Beispiel ein magnetisches Metallteil am Behälter. So kann zum Beispiel auch eine Etikette ein ferromagnetisches Metallteil umfassen. Dem Fachmann sind auch weitere mögliche Ausführungsformen eines Behälters respektive eines Behälterdeckels bekannt, welche mit einem Magneten ergriffen werden können.

In Varianten kann die Aufnahmevorrichtung auch einen Greifer, ausgebildet als Greifer mit zwei oder mehr Greifarmen oder einem Backenfutter, umfassen. Schliesslich kann auch die erste Haltevorrichtung derart ausgebildet sein, dass damit ein Behälter ergriffen und transportiert werden kann. Dem Fachmann sind dazu verschiedenste geeignete Ausführungsformen bekannt.

Zur Lösung der Aufgabe ist weiterhin eine Vorrichtung gemäß Anspruch 1 zum Betätigen eines Schraubdeckels eines Behälters, insbesondere eines Behälters zur Verwendung in einem chemischen Analysengerät, definiert. Diese umfasst eine erste Haltevorrichtung zum Halten des Schraubdeckels, sowie einen Antrieb zum Betätigen der ersten Haltevorrichtung, wobei mit dem Antrieb die erste Haltevorrichtung in eine Drehbewegung versetzbar ist.

Damit kann mit einem einzigen Antrieb die erste Haltevorrichtung betätigt, wie auch die erste Haltevorrichtung in eine Drehbewegung versetzt werden, so dass auf einen zweiten, zusätzlichen Antrieb für eine der beiden Funktionen verzichtet werden kann. Da die Antriebe bei solchen Geräten in der Regel wesentlich zu den Gesamtkosten bei der Herstellung beitragen, kann damit eine besonders kostengünstige Vorrichtung zum Betätigen eines Schraubdeckels erreicht werden, insbesondere kann damit im Zusammenhang mit dem externen Antrieb für das Verfahren der ersten Haltevorrichtung, die Vorrichtung weiter vereinfacht und kostengünstiger hergestellt werden. Die Vorrichtung wird damit zusätzlich besonders robust im Betrieb und ist wartungsarm. Weiter kann gegebenenfalls auch die Vorrichtung kompakter ausgebildet werden, da lediglich ein Antrieb untergebracht werden muss.

In einem Verfahren gemäß Anspruch 15 zum Betätigen eines Schraubdeckels eines Behälters wird durch Betätigung des Antriebs mit der ersten Haltevorrichtung ein Schraubdeckel ergriffen und danach wird mittels desselben Antriebs die erste Haltevorrichtung in eine Drehbewegung versetzt.

Vorzugsweise wird die erste Haltevorrichtung aufgrund der Gewindesteigung des Schraubdeckels respektive des Behälters in Richtung einer durch die Drehbewegung der ersten Haltevorrichtung definierten Rotationsachse des ersten Backenfutters bewegt. Diese Ausbildung ist besonders vorteilhaft, da die Vorrichtung besonders kostengünstig und einfach aufgebaut werden kann und zudem ein Verfahren zum Schliessen oder Öffnen eines Drehverschlusses einfach zu steuern ist. Zumal muss kein zusätzlicher Antrieb für eine Gewindesteigungskompensation vorgesehen sein. Weiter muss bei einer Änderung des Behälters keine Anpassung vorgenommen werden, womit die Vorrichtung besonders flexibel in Bezug auf die Behältergrössen eingesetzt werden kann. Der Kompensationsweg kann zum Beispiel durch eine federnde Auflage des Behälters erreicht werden. Bevorzugt ist aber die Haltevorrichtung in der z-Richtung (in Richtung der Rotationsachse) verschieblich gelagert (siehe unten). In letzterem Fall kann die Gewichtskraft der Haltevorrichtung als Anpresskraft genutzt werden, so dass das Innengewinde des Schraubdeckels in das Aussengewinde des Behälters optimal eingreifen kann. Die Gewichtskraft kann durch fachübliche Mittel auch angepasst sein, zum Beispiel mit Federn, Gegengewichten, Hebelsystemen etc.

In Varianten kann ein zusätzlicher Antrieb vorgesehen sein, welcher die Position der ersten Haltevorrichtung zum Behälter dem aktuellen Schliesszustand des Schraubdeckels anpasst.

Die Vorrichtung umfasst eine Umschaltvorrichtung zum Umschalten der Vorrichtung zwischen einer ersten Konfiguration zum Betätigen der ersten Haltevorrichtung, und einer zweiten Konfiguration zum Versetzen der ersten Haltevorrichtung in eine Drehbewegung. Damit kann eine separate Ansteuerung der beiden Konfigurationen erreicht werden, womit wiederum zum Beispiel eine Betätigungskraft der ersten Haltevorrichtung, insbesondere die Haltekraft unabhängig von Drehmoment für die Drehbewegung angesteuert werden kann. Diese Ausbildung ist besonders vorteilhaft, wenn zum Beispiel ein auf den Behälter zu schraubender Deckel verformbar ist, so kann die Haltekraft der Haltevorrichtung der Stabilität des Schraubdeckels angepasst werden. In solchen Fällen kann zum Beispiel vor dem Öffnen des Schraubdeckels zur Überwindung der Haftreibung die Haltevorrichtung mit grösserer Kraft betätigt werden, damit die Haltevorrichtung während der Drehung am Schraubdeckel nicht rutscht. Sobald der Schraubdeckel in eine Drehbewegung versetzt ist, kann die Haltekraft verringert werden, damit der Schraubdeckel nicht gequetscht wird.

In Varianten oder zusätzlich kann die Vorrichtung auch derart konstruiert sein, dass die beiden Funktionen parallel ausgeführt werden können. Dazu kann für beide Konfigurationen eine eigene Kupplung vorgesehen sein, wobei mit der ersten Kupplung über den Antrieb die Betätigung der ersten Haltevorrichtung und mit der zweiten Kupplung über denselben Antrieb die erste Haltevorrichtung in eine Drehbewegung versetzt werden kann.

Vorzugsweise ist die Haltevorrichtung als selbsthemmende Haltevorrichtung ausgebildet. Dazu kann die Haltevorrichtung zum Beispiel Haltebacken mit im Wesentlichen tangentialer Verzahnung umfassen, welche durch ein axial drehbares, scheibenförmiges Schneckengewinde radial verfahrbar sind. Die Gewindesteigung ist dabei bevorzugt derart gewählt, dass die Selbsthemmung erreicht werden kann.

In Varianten kann die Haltevorrichtung auch anderweitig ausgebildet sein, zum Beispiel analog zu einem Bohrfutter einer Bohrmaschine. Dem Fachmann sind auch weitere mögliche Haltevorrichtungen bekannt.

Bevorzugt umfasst die Vorrichtung ein um eine Rotationsachse der Haltevorrichtung drehbares Betätigungselement zur Betätigung der Haltevorrichtung, wobei mit der Umschaltvorrichtung eine Drehung des Betätigungselements blockierbar ist, so dass mit dem Antrieb die Haltevorrichtung betätigbar ist. Die Haltevorrichtung umfasst damit bevorzugt einen ersten Bereich zum Halten des Behälterdeckels und einen zweiten Bereich, welcher als Betätigungselement für die Haltevorrichtung ausgebildet ist. Der erste und der zweite Bereich sind bevorzugt koaxial angeordnet, das heisst, beide Bereiche sind vorzugsweise um dieselbe Achse drehbar. Vorzugsweise wird mittels einer Relativrotation zwischen der Haltevorrichtung und dem Betätigungselement die Haltevorrichtung betätigt.

Im Verfahren kann nun der Drehverschluss des Behälters durch die Relativrotation zwischen der Haltevorrichtung und dem Betätigungselement ergriffen werden. Anschliessend werden vorzugsweise sowohl die Haltevorrichtung als auch das Betätigungselement in eine Rotationsbewegung versetzt, womit der Drehverschluss gedreht werden kann.

Die Relativrotation zwischen der Haltevorrichtung und dem Betätigungselement ist eine Rotation eines der beiden Elemente (Haltevorrichtung und Betätigungselement) um die gemeinsame Rotationsachse, um welche die Haltevorrichtung und das Betätigungselement rotierbar sind. Unter Relativrotation wird dabei verstanden, dass zumindest eines der beiden Elemente um diese Rotationsachse eine Rotationsbewegung ausführt, wobei aber beide Elemente nicht dieselbe Rotationsbewegung ausführen. Es wäre grundsätzlich denkbar, dass die Betätigung der Haltevorrichtung erreicht werden kann, indem sich beide Elemente mit unterschiedlicher Winkelgeschwindigkeit, in derselben oder zueinander entgegen gesetzter Richtung, rotieren. In einer bevorzugten Ausführungsform wird die Betätigung der Haltevorrichtung aber erreicht, indem eines der beiden Elemente bezüglich einer Rotation blockiert wird, so dass nur eines der beiden Elemente in eine Drehbewegung versetzt wird.

In einer besonders bevorzugten Ausführungsform ist das Betätigungselement als Scheibe mit Schneckengewinde ausgebildet, während die Haltevorrichtung Haltebacken zum Halten eines Schraubdeckels umfasst. Dem Fachmann ist allerdings klar, dass das Betätigungselement und die Haltevorrichtung auch anderweitig, zum Beispiel in der Form eines Bohrfutters oder dergleichen, ausgebildet sein können.

Zusätzlich oder alternativ kann die Umschaltvorrichtung auch eine Drehung der Haltevorrichtung blockieren. Eine zusätzliche Blockierung der Drehung der Haltevorrichtung kann insbesondere dann von Vorteil sein, wenn die Haltevorrichtung nicht selbsthemmend ausgebildet ist.

Vorzugsweise umfasst die Umschaltvorrichtung einen magnetisch aktivierbaren Bolzen zum Blockieren der Drehung des Betätigungselements. Damit wird eine besonders einfache Blockiervorrichtung für das Betätigungselement geschaffen, welches zudem kostengünstig in der Herstellung und robust im Betrieb ist. Zudem ist diese Ausbildung der Blockiervorrichtung äusserst einfach zu bewerkstelligen - das um die Rotationsachse rotierbar gelagerte Betätigungselement ist lediglich mit einer Kerbe oder Vertiefung für den Bolzen auszustatten. In diesem Fall kann zum Beispiel mit einem Sensor, insbesondere mit einem Hallsensor, die Position der Kerbe respektive der Vertiefung lokalisiert werden, so dass der Bolzen genau dann aktiviert werden kann, wenn die Kerbe respektive Vertiefung in einer Position ist, bei welcher der Bolzen in die Kerbe respektive Vertiefung einfahren und so das Betätigungselement blockieren kann. Statt einer Kerbe kann das Betätigungselement auch umlaufend mehrere Kerben umfassen, insbesondere kann das Betätigungselement zum Beispiel ein koaxial zur Rotationsachse montiertes Zahnrad umfassen, wobei der Bolzen zwischen zwei benachbarte Zähne eingreifen kann, um das Betätigungselement zu blockieren.

In Varianten kann die Blockiervorrichtung auch eine Klemmvorrichtung für das Betätigungselement umfassen, welches letzteres durch einen Klemmvorgang an einer Drehung hindern kann. Dem Fachmann sind auch andere Möglichkeiten bekannt.

Vorzugsweise ist der Antrieb als Riemenantrieb, besonders bevorzugt als Zahnriemenantrieb, ausgebildet.

Das Drehmoment zum Betätigen oder Rotieren der Haltevorrichtung wird dabei vorzugsweise vom Antriebsmotor über eine Antriebswelle mit einem Antriebsrad über den Riemen an die Haltevorrichtung übertragen. Damit wird ein wartungsarmer und kostengünstiger Antrieb erreicht. Der Einsatz eines Riemens, respektive Zahnriemens hat den Vorteil, dass durch die, wenn auch geringe, Dehnbarkeit des Riemens grosse Impulse, zum Beispiel beim Anfahren, aufgenommen werden können. Weiter kann der Antrieb derart ausgebildet sein, dass bei zu grossem Drehmoment der Riemen am Antriebsrad rutscht, womit Beschädigungen an der Vorrichtung vermieden werden können. Auf diese Rutschkupplung kann auch verzichtet werden, insbesondere wenn der Motor über das Drehmoment steuerbar ist. Insbesondere im letzteren Fall ist de Riemenantrieb bevorzugt als Zahnriemenantrieb ausgebildet. Dieser hat den Vorteil, dass er kein Schlupf hat. Dies ist zum Beispiel bei Positionsregelungen, wenn der Geber am Motor angeflanscht ist, wichtig. Schliesslich kann mit einem Zahnriemenantrieb ein grösseres Drehmoment übertragen werden, als dies bei einem vergleichbaren Riemenantrieb, welcher der Haftreibung unterliegt, möglich ist.

In Varianten kann auch ein Antrieb über eine Antriebskette oder ein direkter Antrieb über ein Getriebe respektive Zahnräder vorgesehen sein.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Schnittdarstellung der ersten und der zweiten Haltevorrichtung;
- Fig. 2: eine schematische Darstellung einer Draufsicht auf das Dreibackenfutter der zweiten Haltevorrichtung;
- Fig. 3: eine schematische Darstellung der Vorrichtung zur Betätigung eines Drehverschlusses, wobei die erste Haltevorrichtung über eine y,z-Führung in einer Ebene verfahrbar ist;
- Fig. 4: eine schematische Schrägansicht einer Anordnung umfassen eine Vorrichtung gemäss Figur 3 und einen x,y,z-Roboter zum Verfahren der ersten Haltevorrichtung;
- Fig. 5: eine schematische Schrägansicht der Anordnung gemäss Figur 4, wobei der x,y,z-Roboter im Eingriff mit der y,z-Führung steht;
- Fig. 6: eine schematische Darstellung einer weiteren Ausführungsform einer Vorrichtung zur Betätigung eines Drehverschlusses, wobei die erste Haltevorrichtung über entlang eines Bereichs eines Zylindermantels verfahrbar ist.

Grundsätzlich sind in den Figuren gleiche Teile mit gleichen Bezugszeichen versehen.

### Wege zur Ausführung der Erfindung

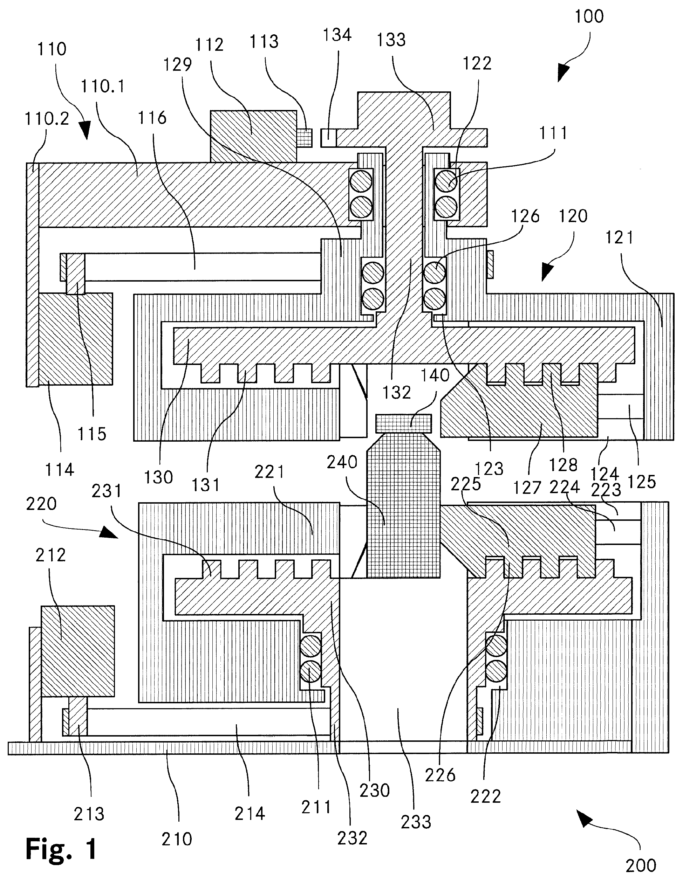

Die Figur 1 zeigt eine schematische Schnittdarstellung der ersten Haltevorrichtung 100 und der zweiten Haltevorrichtung 200. Die zweite, untere Haltevorrichtung 200 dient zum Halten des Behälters 240 und die erste, obere Haltevorrichtung 100 dient zum Halten des Schraubdeckels 140. Im Verfahren zum Öffnen eines Schraubdeckels 140 eines Behälters 240 wird der Behälter 240 in die zweite Haltevorrichtung 200 eingesetzt und gehalten. Danach wird die erste Haltevorrichtung 100 derart positioniert, dass der Schraubdeckel 140 durch die erste Haltevorrichtung 100 ergriffen werden kann. Nach dem Ergreifen wird nun die erste Haltevorrichtung um seine Drehachse in der Öffnungsrichtung, insbesondere entgegen des Uhrzeigersinns, rotiert, so dass der Schraubdeckel 140 vom Behälter 240 abgeschraubt wird. Um einen Behälter 240 mit einem Schraubdeckel 140 zu verschrauben, wird entsprechend ein Behälter 240 mit einem lose aufgesetzten Schraubdeckel 140 in die zweite Haltevorrichtung 200 eingesetzt und fixiert, worauf mit der ersten Haltevorrichtung 100 der Schraubdeckel 140 ergriffen und entgegen der Öffnungsrichtung respektive in Schliessrichtung, insbesondere im Uhrzeigersinn, rotiert. Nachfolgend sind in Bezug auf die Figur 1 die ersten Haltevorrichtung 100 und die zweite Haltevorrichtung 200 im Detail beschrieben.

Die erste Haltevorrichtung 100 umfasst im Wesentlichen eine Halterung 110, über welche die Haltevorrichtung 100 an einer Linearführung (siehe unten) montierbar ist und an welcher das erste Backenfutter 120 drehbar gelagert ist.

Die Haltevorrichtung 100 umfasst eine Leiste 110.1, an welcher am einen Ende über ein Kugellager 111 das erste Backenfutter 120 um eine zur Leiste 110.1 rechtwinklig orientierte Achse drehbar gelagert ist. Auf der Leiste 110.1 ist zudem der Umschalter 112 mit dem magnetisch aktivierbaren Bolzen 113 montiert. Am zweiten Ende der Leiste 110.1 und rechtwinklig zu dieser ist eine Montageplatte 110.2 montiert, an welcher der Antriebsmotor 114, mit der Antriebswelle 115 parallel zur Montageplatte 110.2 und rechtwinklig zur Leiste 110.1, befestigt ist. Der Antriebsmotor 114 und der Umschalter 112 sind an gegenüberliegenden Seiten der Leiste 110.1 angeordnet.

Das erste Backenfutter 120 umfasst im Wesentlichen ein Backenfuttergehäuse 121 und eine innerhalb des Backenfuttergehäuses 121 rotierbar gelagerte Gewindeplatte 130 mit einer Antriebswelle 132.

Das Backenfuttergehäuse 121 des ersten Backenfutters 120 weist eine innen hohle, kreiszylindrische Grundform mit einem koaxial zum Kreiszylinder angeordneten Lagerzylinder 129 auf. In der kreiszylindrischen Grundform ist die kreisscheibenförmige Gewindeplatte 130 gelagert. Der Lagerzylinder 129 umfasst zwei im Wesentlichen kreiszylindrische Bereiche. Der erste Bereich des Lagerzylinders 129, welcher sich unmittelbar an die Grundform anschliesst, umfasst innwändig eine umlaufende Nut, in welcher ein Kugellager 126 für die Antriebswelle 132 der Gewindeplatte 130 angeordnet ist. Der sich dem ersten Bereich anschliessende, zweite Bereich des Lagerzylinders 129 umfasst aussenseitig eine umlaufende Nut, in welcher ein Kugellager 111 angeordnet ist. Über das Kugellager 111 ist das Backenfuttergehäuse 121 an der Halterung 110 rotierbar gelagert. Das Kugellager 126 und das Kugellager 111 sind beide koaxial zur Rotationsachse des Backenfuttergehäuses 121 respektive koaxial zu den einzelnen Zylinderachsen des ersten Bereichs, des zweiten Bereichs und der kreiszylindrischen Grundform angeordnet.

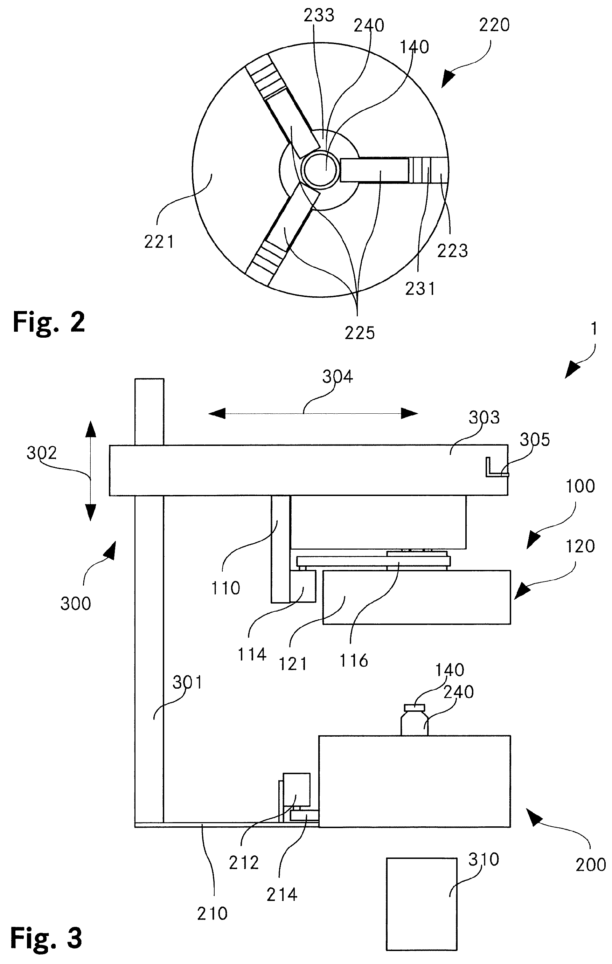

Das Backenfuttergehäuse 121 weist auf der, den zylindrischen Bereichen gegenüberliegende Seite, eine Öffnung zur Aufnahme eines Schraubdeckels 140 auf. Die Öffnung ist koaxial zum Kugellager 126 respektive zur kreiszylindrischen Grundform des Backenfuttergehäuses 121 orientiert. In diese Öffnung münden drei radial orientierte Schlitze 124 (in der Figur 1 ist nur ein Schlitz 124 ersichtlich), in welchen die Backen 127 des ersten Backenfutters 120 radial geführt sind. Die drei Schlitze 124 sind sternförmig und regelmässig, das heisst mit jeweils einem Zwischenwinkel von 120°, angeordnet (siehe unten, zur Figur 2). Die Schlitze 124 sind jeweils beidseitig mit Nuten 125 zur radialen Führung der Backen 127 versehen, so dass eine axiale Bewegung der Backen 127 unterbunden werden kann. Die Backen 127 umfassen dazu seitliche Führungsleisten, welche in den Nuten 125 radial in Form einer Gleitführung geführt sind. Somit können die Backen 127 in radialer Richtung hin und her bewegt werden. Um einen Schraubdeckel 140 zu halten, werden die Backen 127 radial nach innen geführt.

Die Gewindeplatte 130 weist die Form einer Kreisscheibe auf. Einseitig ist die Gewindeplatte 130 mit einem Schneckengewinde 131 versehen. Die Gewindeplatte 130 ist im Backenfuttergehäuse 121 im Hohlraum des kreiszylindrischen Grundkörpers rotierbar gelagert. Auf der dem Schneckengewinde 131 gegenüberliegenden Seite der Gewindeplatte 130 ist diese dazu koaxial zur Kreisscheibe mit einer Antriebswelle 132 verbunden. Die Antriebswelle 132 ist über das Kugellager 126 im Lagerzylinder 129 rotierbar gelagert. An dem zur Gewindeplatte 130 gegenüberliegenden Ende der Antriebswelle 132 ist letztere mit einem Blockierrad 133 verbunden. Dieses ebenfalls kreiszylindrische Blockierrad 133 ragt aus dem Lagerzylinder 129 hinaus und umfasst aussenseitig eine Ausnehmung 134, in welche der Bolzen 113 des magnetischen Umschalters 112 eingreift, und damit eine Drehung der Gewindeplatte 130 blockiert werden kann. Entsprechend ist der magnetische Umschalter 112 auf Leiste 110.1 derart montiert, dass durch Aktivieren des Umschalters 112 ein Eingreifen des Bolzens 113 in die Ausnehmung 134 erreicht werden kann. Der Umschalter 112 ist vorliegend derart ausgebildet, dass im energielosen Zustand kein Eingriff des Bolzens 113 in die Ausnehmung 134 erfolgt. Es ist aber klar, dass der Umschalter 112 auch derart ausgebildet sein kann, dass im energielosen Zustand ein Eingriff des Bolzens 113 in die Ausnehmung 134 stattfindet.

Während der zweite Bereich des Lagerzylinders 129 über das Kugellager 111 in der Leiste 110.1 rotierbar gelagert ist, ist der Aussenbereich des ersten Bereichs des Lagerzylinders 129 als Antriebsrad respektive Lauffläche für ein durch den Antriebsmotor 114 angetriebenen Antriebsriemen 116 ausgebildet. Dieser Aussenbereich kann dazu entsprechend strukturiert sein oder sonstige bekannte Führungshilfen für den Antriebsriemen 116 umfassen.

Die Backen 127 sind über das Schneckengewinde 131 der Gewindeplatte radial verfahrbar. Die Backen 127 weisen in einer Ebene rechtwinklig zur Zylinderachse des Backenfuttergehäuses 121 eine rechteckige Grundform auf. Die in axialer Richtung in den Hohlraum des Backenfuttergehäuses 121 ragende Oberfläche der Backen 127 ist mit tangentialen Nuten versehen, welche ein Gewinde 128 bilden, das als Gegenstück zum Schneckengewinde 131 der Gewindeplatte 130 fungiert. Die Backen 127 sind mit deren Gewinde 128 jeweils in Eingriff mit dem Schneckengewinde 131 der Gewindeplatte 130. Wird nun die Gewindeplatte 130 relativ zum Backehfuttergehäuse 121 rotiert, so werden die Backen 127, je nach Drehrichtung, radial in Richtung zur Drehachse oder radial entgegen der Richtung zur Drehachse verfahren. Aufgrund der Gewindesteigung des Schneckengewindes 131 respektive des Gewindes 128 der Backen handelt es sich bei diesem Backenfutter 120 um ein sogenanntes selbsthemmendes Dreibackenfutter. Unter dem Begriff selbsthemmend wird verstanden, dass sich die Positionen der Backen 127 im Backenfutter 120 nicht selbständig, zum Beispiel durch Erschütterungen oder aufgrund zu geringer Reibung, verändern können. Die Selbsthemmung kann natürlich neben der Gewindesteigung auch durch andere Faktoren, wie die Schmierung, Oberflächenbeschaffenheit etc. beeinflusst werden.

Für das erste Backenfutter 120 gibt es somit zwei Betriebsmodi, welche durch den Umschalter 112 gewählt werden können.

Im ersten Betriebsmodus ist der Umschalter 112 energielos, so dass der Bolzen 113 nicht in die Ausnehmung 134 des Blockierrads 133 eingreift. Wird nun der Antriebsmotor 114 aktiviert, so wird die Rotationsbewegung der Antriebswelle 115 mittels Antriebsriemen 116 auf den ersten Bereich des Lagerzylinders 129 übertragen und versetzt somit das Backenfuttergehäuse 121 in eine Rotationsbewegung. Da das erste Backenfutter 120 selbsthemmend ist und das Blockierrad 133 nicht durch den Bolzen 113 blockiert ist, dreht die Gewindeplatte 130 mit dem Backenfuttergehäuse 121 mit. Gesamthaft wird damit das erste Backenfutter 120 rotiert, ohne dass das Backenfutter 120 respektive die Backen 127 betätigt werden. In diesem Zustand wird ein bereits durch das erste Backenfutter gehaltener Schraubdeckel 140 gedreht.

Im zweiten Betriebsmodus ist der Umschalter 112 aktiviert, so dass der Bolzen 113 in die Ausnehmung 134 des Blockierrads 133 eingreift. Wird nun der Antriebsmotor 114 aktiviert, so wird die Rotationsbewegung der Antriebswelle 115 wiederum mittels Antriebsriemen 116 auf den ersten Bereich des Lagerzylinders 129 übertragen und versetzt somit das Backenfuttergehäuse 121 in eine Rotationsbewegung. Da nun das Blockierrad 133 durch den Bolzen 113 blockiert ist, dreht die Gewindeplatte 130 nicht mit dem Backenfuttergehäuse 121 mit. Gesamthaft wird damit das erste Backenfutter 120 rotiert, während die Gewindeplatte 130 fixiert ist. Durch diese Relativrotation werden.die Backen 127 des Backenfutters 120 abhängig von der Drehrichtung radial nach innen oder nach aussen verfahren. In diesem Betriebsmodus kann ein Schraubdeckel 140 ergriffen oder losgelassen werden.

Um einen Schraubdeckel 140 mit einer Rotationsbewegung des ersten Backenfutters 120 von einem Behälter 240 lösen oder anziehen zu können, muss der Behälter 240 bezüglich der ersten Haltevorrichtung 100 gehalten werden können. Dazu umfasst die Vorrichtung bevorzugt eine zweite Haltevorrichtung 200 mit einem zweiten Backenfutter 220, welches unterhalb des ersten Backenfutters 120 angeordnet ist.

Das zweite Backenfutter 220 übernimmt vorliegend nur die Funktion des Haltens des Behälters 240.

Das zweite Backenfutter 220 umfasst ein Backenfuttergehäuse 221, welches fix auf einer Montageplatte 210 montiert ist. Das Backenfuttergehäuse 221 weist im Wesentlichen eine kreiszylindrische Grundform mit einem Hohlraum für eine Kreisringplatte 230 auf.

Die Kreisringplatte 230 ist an einer Oberfläche mit einem Schneckengewinde 231 versehen, welches wiederum die Backen 225 des zweiten Backenfutters 220 verfahren kann - dies erfolgt analog zum ersten Backenfutter 120. Für die Beschreibung der Funktion der Backen 225, des Gewindes 226 der Backe mit dem Schneckengewinde 231 der Kreisringplatte 230, der radialen Schlitze 223 und der Nuten 224 zur Führung der Backen wird auf die Beschreibung des ersten Backenfutters 120 verwiesen. Auf der dem Schneckengewinde 231 gegenüberliegenden Seite der Kreisringplatte 230 ist eine Antriebswelle 232, im Wesentlichen in Form eines Hohlzylinders, mit der Kreisringplatte 230 verbunden. Umlaufend um die Antriebswelle 232 ist ein Kugellager 211 derart angeordnet, dass die Kreisringplatte 230 am Backenfuttergehäuse 221 rotierbar ist. In der vorliegenden Ausführungsform weisen das Backenfuttergehäuse 221 und die Antriebswelle komplementäre Absätze auf, zwischen welchen das Kugellager 211 gehalten ist.

Der Innendurchmesser der Antriebswelle 232 entspricht einer zentralen Öffnung der Kreisringplatte 230, des zweiten Backenfuttergehäuses 221 und einer Öffnung in der Montageplatte 210. Sämtliche Öffnungen sind koaxial derart angeordnet, dass bei offenem Backenfutter eine durchgängige Öffnung im zweiten Backenfutter 220 vorliegt. Damit können Behälter und Schraubdeckel gegebenenfalls durch die durchgängige Öffnung hindurch fallen gelassen werden, insbesondere wenn der Behälter als Ausschussware identifiziert ist. Anderseits können die Behälter nach dem Betätigen des Schraubdeckels auch von unten, durch die durchgängige Öffnung, entnommen werden. Prinzipiell besteht somit die Möglichkeit, das zweite Backenfutter von oben und von unten zu beschicken respektive zu entladen.

Auf der Montageplatte 210 ist ein Antriebsmotor 212 für das zweite Backenfutter 220 montiert, welcher über eine Antriebswelle 213 einen Antriebsriemen 214 antreiben kann. Die Antriebswelle 232 weist dazu eine Lauffläche für den Antriebriemen 214 auf, welche bezüglich des Kugellagers 211 gegenüber der Kreisringplatte 230 angeordnet ist. Das Backenfuttergehäuse 221 weist für die Führung des Antriebsriemens 214 angrenzend zur Montageplatte 210 einen Kanal auf.

Bei einer Betätigung des Antriebs 212 werden, je nach Rotationsrichtung, die Backen 225 radial nach innen oder nach aussen verfahren, so dass entsprechend ein Behälter 240 gehalten oder losgelassen werden kann.

Die Figur 2 zeigt eine schematische Darstellung einer Draufsicht auf das zweite Dreibackenfutter 220 der zweiten Haltevorrichtung 200. Dabei ist ersichtlich, dass das Backenfuttergehäuse 221 im Wesentlichen kreiszylindrisch ausgebildet ist und zur Führung der Backen 225 drei sternförmig angeordnete Schlitze 223 umfasst. Durch die zentrale Öffnung 233 kann der Behälter 240 (mit dem Schraubdeckel 140) fallen gelassen werden. Schliesslich ist in den Schlitzen 223 jeweils die Kreisringplatte 230 mit dem Schneckengewinde 231 ersichtlich. Im dargestellten Zustand wird ein Behälter 240 durch die Backen 225 gehalten.

Insbesondere wenn Behälter 240 direkt von oben in das zweite Backenfutter 220 respektive direkt von unten in das erste Backenfutter 120 eingesetzt werden sollen, dann ist vorzugsweise mindestens eine der beiden Haltevorrichtungen 100, 200 in mindestens eine Richtung hin und her bewegbar. Mit "direkt" wird dabei verstanden, dass der Behälter 240 nicht zuvor das andere Backenfutter passiert.

Die Figur 3 zeigt eine schematische Darstellung der Vorrichtung zur Betätigung eines Drehverschlusses 1, wobei die erste Haltevorrichtung 100 mit einer y,z-Führung 300 in einer vertikalen Ebene verfahrbar ist. Die beiden Haltevorrichtungen 100, 200 entsprechen denjenigen der Figur 1, so dass für die Details auf die obige Beschreibung verwiesen wird.

In der vorliegenden Ausführungsform ist die erste Haltevorrichtung 100 an einer y-Schiene befestigt, welche an einer z-Schiene 303 in y-Richtung 304 wie auch in z-Richtung 302 verfahrbar ist. Die y,z-Führung 300 ist nicht motorisiert, das heisst, sie ist vorliegend antriebslos. Das Verfahren der ersten Haltevorrichtung 100 erfolgt in der vorliegenden Ausführungsform durch einen externen Antrieb (siehe unten). Dazu umfasst die z-Schiene 303 einen L-förmigen Schlitz 305, in welche ein entsprechendes L-förmiges Element (siehe unten) eines Roboters formschlüssig eingreifen und damit die erste Haltevorrichtung 100 in der y,z-Ebene verfahren kann.

In der Darstellung gemäss Figur 3 ist bereits ein Behälter 240 mit Schraubdeckel 140 in der zweiten Haltevorrichtung 200 eingesetzt. Die erste Haltevorrichtung 100 ist bezüglich der y-Richtung 304 korrekt positioniert, so dass diese nun in z-Richtung 302 nach unten verfahren werden kann, um mit dem ersten Backenfutter 120 den Deckel 140 zu ergreifen (zweiter Betriebsmodus, Bolzen des Umschalters ist aktiviert, so dass die Gewindeplatte 130 mit dem Backenfuttergehäuse 121 mitdreht) und anschliessend, zum Öffnen oder Schliessen, zu rotieren (erster Betriebsmodus, Bolzen des Umschalters ist nicht aktiviert).

Im Anschluss zur Betätigung des Schraubdeckels 140 wird das erste Backenfutter 120 wieder gelöst. Um den Behälter 240 von oben aus der zweiten Haltevorrichtung entnehmen zu können, wird nun die y-Schiene mit der ersten Haltevorrichtung 100 in z-Richtung 302 nach oben und danach in y-Richtung 304 verfahren. Damit wird der Raum über dem Behälter 240 frei für den Zugriff eines Roboters oder dergleichen. Nachdem der Behälter 240 ergriffen ist, wird das zweite Backenfutter 220 gelöst.

Alternativ können aber auch beide Backenfutter 120 gelöst werden, so dass der Behälter 240 durch die durchgängige Öffnung hindurch in einen Auffangbehälter 310 fallen gelassen werden kann.

Wie bereits erwähnt, ist die y,z-Führung selbst antriebslos ausgebildet. Bei einer Betätigung eines Schraubdeckels 140 durch die erste Haltevorrichtung 100 wird durch die Gewindesteigung des Schraubdeckels 140 die Haltevorrichtung 100 in z-Richtung antriebslos verfahren. Dies hat den Vorteil, dass keine Justierung bei wechselnder Gewindesteigung notwendig ist. Für das Verfahren der ersten Haltevorrichtung ist deshalb ein externer Roboter vorgesehen, vorzugsweise ein Roboter, welcher bereits Funktionen wie der Behältertransport oder Probenentnahmen übernehmen kann. Damit wird die Auslastung des Roboters optimiert, aber auch die Kosten für die Vorrichtung und die Wartung gesenkt.

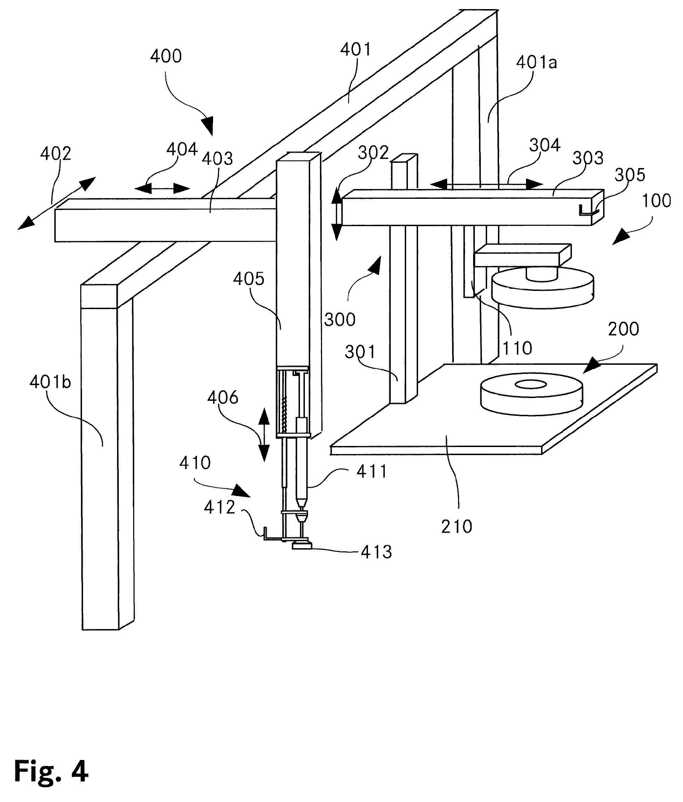

In der Figur 4 ist eine schematische Schrägansicht einer Anordnung umfassend eine Vorrichtung 1 gemäss Figur 3 und einen externen x,y,z-Roboter 400 zum Verfahren der ersten Haltevorrichtung 100 dargestellt. Vorliegend ist der x,y,z-Roboter 400 derart ausgebildet, dass sowohl die y,z-Führung 300 bedient, als auch Behälter 240 transportiert oder Proben aus einem Behälter entnommen werden können. Auf die letzteren Funktionen (eine oder beide) kann auch verzichtet werden, oder sie können durch eine oder mehrere andere Funktionen ersetzt werden (SPME-Vorrichtung, Rührvorrichtung, Heizelement, Greifarm etc.). Die Funktionen werden jeweils dem Einsatzgebiet angepasst.

Der x,y,z-Roboter 400 umfasst vorliegend eine x-Schiene 401, eine y-Schiene 403 und eine z-Schiene 405. Die x-Schiene 401 umfasst zwei Stützen 401 a, 401 b, über welche der x,y,z-Roboter 400 auf einer Auflage montiert ist. An der x-Schiene 401 ist eine y-Schiene 403 in x-Richtung 402 wie auch in y-Richtung 404 verfahrbar gehalten. An der y-Schiene 403 ist schliesslich eine z-Schiene 405 gehalten, an welcher vorliegend eine Spritzeneinheit 410 in z-Richtung 406 verfahrbar gehalten ist.

Die Spritzeneinheit 410 umfasst eine Spritze 411 zum Entnehmen vom Proben, zum Beispiel aus einem Behälter mit einem Septum oder dergleichen. Die Spritzeneinheit 410 umfasst weiter eine Haltevorrichtung 413 zum Ergreifen eines Behälters 240. Die Haltevorrichtung 413 ist vorliegend als Magnetkappe ausgebildet, kann aber auch einen Greifer oder ähnliches umfassen. Schliesslich umfasst die Spritzeneinheit 410 ein L-förmiges Element 412, welches in den L-förmigen Schlitz 305 der y-Schiene der y,z-Führung eingreifen kann, um die erste Haltevorrichtung über die y,z-Führung in der y,z-Ebene zu verfahren.

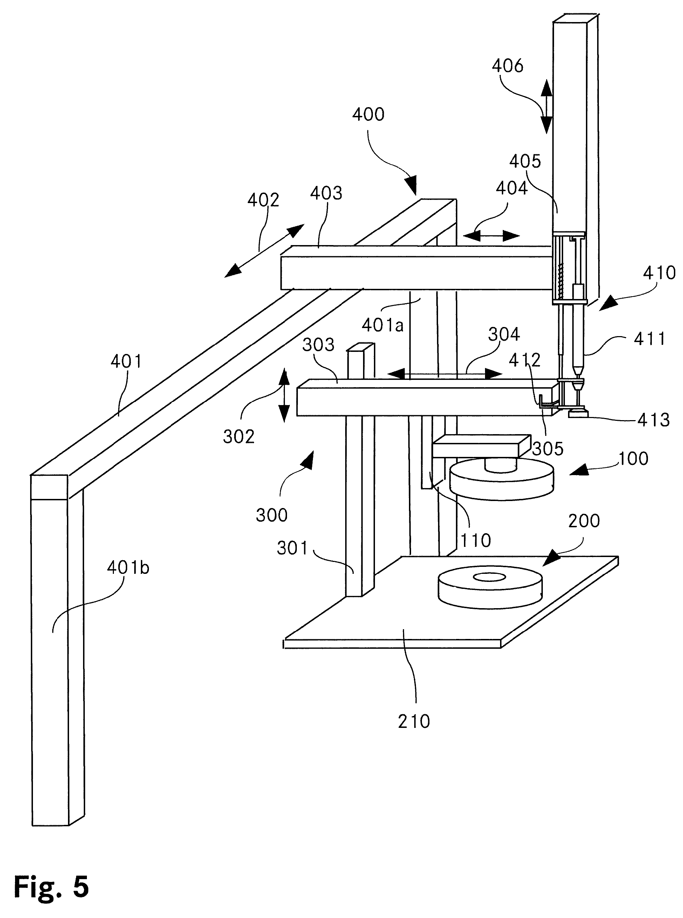

Die Figur 5 zeigt eine schematische Schrägansicht der Anordnung gemäss Figur 4, wobei der x,y,z-Roboter 400 im Eingriff mit der y,z-Führung 300 steht. Der x,y,z-Roboter 400 wurde dazu derart in der y,z-Ebene positioniert, dass das L-förmige Element 412 in x-Richtung 402 in der Flucht zum L-förmigen Schlitz 305 der y-Schiene orientiert ist. Danach verfährt der x,y,z-Roboter 400 mit der y-Schiene 403 in x-Richtung 402, bis das L-förmige Element 412 in Eingriff mit dem L-förmigen Schlitz 305 ist. Dabei ist zu beachten, dass in der vorliegenden Ausführungsform die y-Schiene 303 der y,z-Führung 300 nicht in x-Richtung 402 verfahrbar ist, so dass ein sicheres Ergreifen durch das L-förmige Element 412 gewährleistet ist. In dieser Konfiguration gemäss Figur 5 kann nun die erste Haltevorrichtung 100 mittels des x,y,z-Roboters 400 in der x,y-Ebene verfahren werden.

Das Backenfutter 120 respektive 220 muss nicht zwingend als Dreibackenfutter ausgebildet sein. In einer weiteren Ausführungsform können auch nur zwei oder mehr als drei, insbesondere vier Backen 127 vorgesehen sein.

Die Gewindeplatte 130 kann in einer weiteren Ausführungsform eine zentrale Öffnung umfassen und die Antriebswelle 132 mit dem Blockierrad 133 können als Hohlkörper, das heisst, im Wesentlichen als Zylindermantel ausgebildet sein. Damit können zum Beispiel Schraubdeckel 140 von oben in das erste Backenfutter 120 eingeführt werden, womit ein Verschrauben von Behälter 240 mit Schraubdeckeln 140 effizienter erreicht werden kann. Ebenso können Behälter 240, mit oder ohne Schraubdeckel 140, von oben in die Vorrichtung 1 eingeführt werden, womit diese kompakter ausgebildet sein kann, insbesondere da nicht zwingend ein Zugriff zwischen den beiden Backenfutter 120, 220 erreichbar sein muss. So könnte der Behälter 240 auch von unten durch die zentrale Öffnung 233 des zweiten Backenfutters 220 und der Deckel 140 wie obig beschrieben von oben eingeführt werden. Schliesslich kann auch das zweite Backenfutter 220 über einen Behälter 220 geführt und abgesenkt werden, so dass die Behälter 220 zum Beispiel auf einem Förderband oder dergleichen bereit gestellt werden können. Damit kann auf einen Robotertransport der Behälter 220 verzichtet werden.

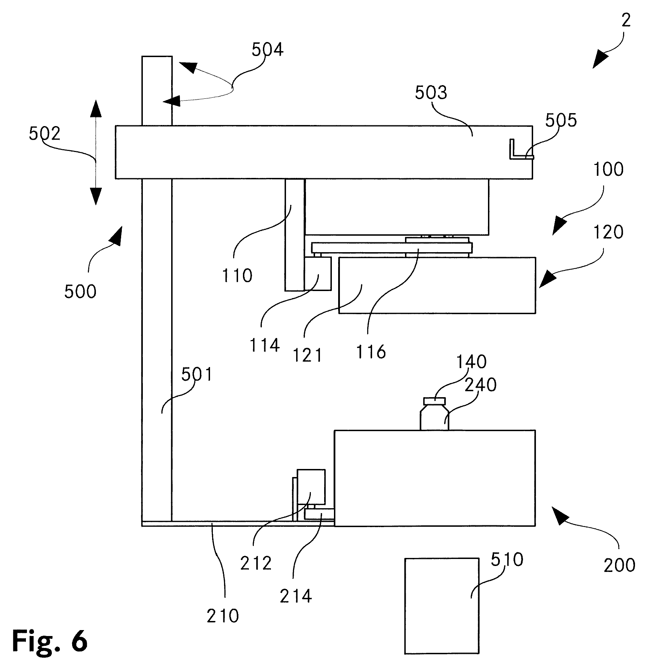

Die Figur 6 zeigt eine schematische Darstellung einer weiteren Ausführungsform einer Vorrichtung 2 zur Betätigung eines Schraubdeckels 140, wobei die erste Haltevorrichtung 100 über entlang eines Bereichs eines Zylindermantels verfahrbar ist. Im Wesentlichen stimmt die Vorrichtung 2 mit der Vorrichtung 1 überein, wobei jeweils statt 300er Nummern 500er Nummern verwendet werden. Nachfolgend wird nur auf die Unterschiede eingegangen. Das Zylinderkoordinatensystem wird durch eine z-Schiene 501, welche senkrecht angeordnet ist, sowie einen y-Arm 503, welcher in z-Richtung 502 an der z-Schiene 501 verfahrbar ist und zudem um die z-Schiene 501 in der Rotationsrichtung 504 rotierbar ist. Am distalen Ende des y-Arms 503 ist wiederum ein L-förmiger Schlitz 505 für den x,y,z-Roboter 400 vorgesehen. Der L-förmige Schlitz 505 ist dabei vorzugsweis nicht exakt in Drehrichtung 504 des y-Arms 503 ausgerichtet, so dass bei jeder Bewegung ein Formschluss des L-förmigen Schlitzes 505 und des L-förmigen Elements 412 gewährleistet bleibt.

In Varianten kann daher für diese Ausführungsform statt des L-förmigen Schlitzes 505 auch lediglich eine in z-Richtung orientierte Bohrung von Unten am distalen Ende des y-Arms 503 vorgesehen sein. Der x,y,z-Roboter 400 würde in diesem Fall einen entsprechenden Stift aufweisen, welche in die Bohrung einfahren kann. Diese Ausbildung ist von Vorteil, da damit beim Schwenkvorgang durch den x,y,z-Roboter 400 die Schwenkbewegung des y-Arms 503 selbst nicht zwingend berücksichtigt werden müsste.

Prinzipiell können die beiden Backenfutter 120, 220 auch vertauscht sein, im Sinne dass das untere Backenfutter 220 rotierbar und betätigbar ausgebildet ist, während das obere Backenfutter 120 lediglich betätigbar ist. Das heisst, es kann prinzipiell auch der Schraubdeckel 140 gehalten werden, während der Behälter 240 rotiert wird. Statt eines externen x,y,z-Roboters kann auch die y,z-Führung motorisiert sein.

Bei den Antriebsmotoren 114 und 212 handelt es sich bevorzugt um drehmomentgesteuerte Motoren, so dass eine Druckkraft auf den Behälter 240 respektive auf den Schraubdeckel 140 so angepasst werden kann, dass Beschädigungen vermieden werden können.

Zusammenfassend ist festzustellen, dass erfindungsgemäss eine Vorrichtung zum Betätigen von Schraubverschlüssen bereitgestellt wird, welche besonders kostengünstig herstellbar ist und einfach in bestehende Systeme integriert werden kann. Zudem zeichnet sich die erfindungsgemässe Vorrichtung durch eine verbesserte Auslastung einzelner mechanischer Elemente aus. Insbesondere können bestehende Ressourcen optimal genutzt werden, so dass die Vorrichtung einfacher aufgebaut und insbesondere mit weniger eigenen Antriebseinheiten ausgebildet werden kann.

## Patentansprüche

1. Vorrichtung (1) zum Betätigen eines Schraubdeckels (140) eines Behälters (240), insbesondere eines Behälters (240) zur Verwendung in einem chemischen Analysengerät, umfassend eine erste Haltevorrichtung (100) zum Halten des Schraubdeckels (140), sowie einen Antrieb (114) zum Betätigen der ersten Haltevorrichtung (100), wobei mit dem Antrieb (114) die erste Haltevorrichtung (100) in eine Drehbewegung versetzbar ist, **dadurch gekennzeichnet, dass** sie eine Umschaltvorrichtung (112) umfasst zum Umschalten der Vorrichtung (1) zwischen einer ersten Konfiguration zum Öffnen und Schliessen der ersten Haltevorrichtung (100), und einer zweiten Konfiguration zum Versetzen der ersten Haltevorrichtung (100) in eine Drehbewegung wobei durch die Umschaltvorrichtung (112) eine separaten Ansteuerung der beiden Konfigurationen erreicht wird.

2. Vorrichtung (1) nach Anspruch 1, **dadurch gekennzeichnet, dass** sie ein um eine Rotationsachse der Haltevorrichtung (100) drehbares Betätigungselement (130, 132, 133) zur Betätigung der Haltevorrichtung (100) umfasst, wobei mit der Umschaltvorrichtung (112) eine Drehung des Betätigungselements (130, 132, 133) blockierbar ist, so dass mit dem Antrieb (114) die Haltevorrichtung (100) betätigbar ist.

3. Vorrichtung (1) nach Anspruch 1 oder 2, **dadurch gekennzeichnet, dass** die Umschaltvorrichtung (112) einen magnetisch aktivierbaren Bolzen (113) zum Blockieren der Drehung des Betätigungselements (130, 132, 133) umfasst.

4. Vorrichtung (1) nach einem der Ansprüche 1 bis 3, **dadurch gekennzeichnet, dass** der Antrieb (114) als Riemenantrieb (114, 116), besonders bevorzugt als Zahnriemenantrieb, ausgebildet ist.

5. Anordnung umfassend eine Vorrichtung (1) zum Betätigen eines Schraubdeckels (140) eines Behälters (240) nach einem der Ansprüche 1 bis 4, **dadurch gekennzeichnet, dass** die Anordnung weiter einen externen Antrieb, insbesondere einen Roboter (400) umfasst, wobei die erste Haltevorrichtung (100) eine Kopplungsvorrichtung (303, 305) zum Ankoppeln des externen Antriebs umfasst, womit die erste Haltevorrichtung (100) mittels des externen Antriebs verfahrbar ist.

6. Anordnung nach Anspruch 5, **dadurch gekennzeichnet, dass** die erste Haltevorrichtung (100) in einer Ebene (402, 404) verfahrbar ist.

7. Anordnung nach Anspruch 5 oder 6, **dadurch gekennzeichnet, dass** die erste Haltevorrichtung (100) entlang einer ersten Achse verfahrbar und um eine zweite Achse schwenkbar ist.

8. Anordnung nach einem der Ansprüche 5 bis 7, **dadurch gekennzeichnet, dass** sie eine zweite Haltevorrichtung (200) zum Ergreifen des Behälters (240) umfasst.

9. Anordnung nach Anspruch 8, **dadurch gekennzeichnet, dass** die erste und/oder die zweite Haltevorrichtung (100, 200) als Backenfutter und insbesondere zur Aufnahme von Schraubdeckeln (140) respektive Behälter (240) unterschiedlicher Durchmesser, ausgebildet ist.

10. Anordnung nach Anspruch 8 oder 9, **dadurch gekennzeichnet, dass** die erste und/oder die zweite Haltevorrichtung (100, 200) selbsthemmend ist.

11. Anordnung nach einem der Ansprüche 8 bis 10, **dadurch gekennzeichnet, dass** die zweite Haltevorrichtung (200) eine zentrale Öffnung (233) umfasst, durch welche ein durch die zweite Haltevorrichtung (200) gehaltener Behälter (240) fallen gelassen werden kann.

12. Anordnung nach einem der Ansprüche 5 bis 11, **dadurch gekennzeichnet, dass** der externe Antrieb, insbesondere der Roboter (400) ein Greifelement (412) zum Ergreifen und Verfahren der ersten Haltevorrichtung (100) in der Ebene umfasst.

13. Anordnung nach einem der Ansprüche 5 bis 12, **dadurch gekennzeichnet, dass** der externe Antrieb, insbesondere der Roboter eine Aufnahmevorrichtung (413) zum Aufnehmen eines Behälters (240) mit einem Schraubdeckel (140) umfasst.

14. Anordnung nach Anspruch 13, **dadurch gekennzeichnet, dass** die Aufnahmevorrichtung (413) einen Magneten zum Aufnehmen des Behälters (240) mit dem Schraubdeckel (140) umfasst.

15. Verfahren zum Betätigen eines Schraubdeckels (140) eines Behälters (240), insbesondere mit einer Vorrichtung (1) nach einem der Ansprüche 1 bis 4, wobei durch Betätigung eines Antriebs (114) mit einer ersten Haltevorrichtung (100) ein Schraubdeckel (140) ergriffen wird, **dadurch gekennzeichnet, dass** nach dem Ergreifen des Schraubdeckels (140) eine Umschaltvorrichtung, die zum Umschalten der Vorrichtung (1) zwischen einer ersten Konfiguration zum Öffnen und Schliessen der ersten Haltevorrichtung (100), und einer zweiten Konfiguration zum Versetzen der ersten Haltevorrichtung (100) in eine Drehbewegung so vorgesehen ist, dass eine separate Ansteuerung der beiden Konfigurationen erreicht wird, derart umschaltet, dass mittels des Antriebs (114) die erste Haltevorrichtung (100) in eine Drehbewegung versetzt wird.

16. Verfahren nach Anspruch 15, wobei die erste Haltevorrichtung (100) aufgrund der Gewindesteigung des Schraubdeckels (140) respektive des Behälters (240) in Richtung einer durch die Drehbewegung der ersten Haltevorrichtung (100) definierten Rotationsachse des ersten Backenfutters (120) bewegt wird.

17. Verfahren nach Anspruch 15 oder 16, wobei während der Betätigung des Schraubdeckels (140), der Behälter (240) durch eine zweite Haltevorrichtung (200) gehalten wird.

18. Verfahren nach einem der Ansprüche 15 bis 17, wobei der Behälter (240) und/oder der Schraubdeckeln (140), insbesondere bei einer Identifikation als Ausschussware, durch

19. Verfahren nach einem der Ansprüche 15 bis 18, wobei unter Verwendung einer Anordnung nach einem der Ansprüche 5 bis 14, mit einem externen Roboter (400) eine erste Haltevorrichtung (100) verfahren und anschliessend der Schraubdeckel (140) durch die erste Haltevorrichtung (100) ergriffen und betätigt wird.

## Claims

1. Device (1) for activating a screw cap (140) of a container (240), in particular a container (240) for use in a chemical analyzer, comprising a first holding device (100) for holding the screw cap (140), and a drive (114) for activating the first holding device (100), wherein the first holding device (100) is settable into a rotational movement by the drive (114), **characterized in that** the device further comprises a switchover device (112) for switching over the device (1) between a first configuration for opening and closing the first holding device (100) and a second configuration for setting the first holding device (100) into a rotational movement, wherewith a separate activation of the two configurations is achieved.

2. Device (1) according to claim 1, **characterized in that** said device comprises an activating element (130, 132, 133) which is rotatable about an axis of rotation of the holding device (100) for activating the holding device (100), wherein rotation of the activating element (130, 132, 133) is blockable by the switchover device (112) such that the holding device (100) is activatable by the drive (114).

3. Device (1) according to claim 1 or 2, **characterized in that** the switchover device (112) comprises a magnetically activatable bolt (113) for blocking the rotation of the activating element (130, 132, 133).

4. Device (1) according to one of claims 1 to 3, **characterized in that** the drive (114) is designed as a belt drive (114, 116), particularly preferably as a toothed belt drive.

5. Arrangement comprising a device (1) for activating a screw cap (140) of a container (240) according to one of claims 1 to 4, **characterized in that** the arrangement further comprising an external drive, in particular a robot (400), wherein the first holding device (100) comprises a coupling device (303, 305) for the coupling of the external drive, and therefore the first holding device (100) is movable by means of the external drive.

6. Arrangement according to claim 5, **characterized in that** the first holding device (100) is movable in a plane (402, 404).

7. Arrangement according to claim 5 or 6, **characterized in that** the first holding device (100) is movable along a first axis and is pivotable about a second axis.

8. Arrangement according to one of claims 5 to 7, **characterized in that** said device comprises a second holding device (200) for grasping the container (240).

9. Arrangement according to claim 8, **characterized in that** the first and/or the second holding device (100, 200) is designed as jaw chucks and in particular for picking up screw caps (140) or containers (240) of differing diameter.

10. Arrangement according to claim 8 or 9, **characterized in that** the first and/or the second holding device (100, 200) is self-locking.

11. Arrangement according to one of claims 8 to 10, **characterized in that** the second holding device (200) comprises a central opening (233) through which a container (240) held by the second holding device (200) can be dropped.

12. Arrangement according to one of claims 5 to 11, **characterized in that** the external drive, in particular the robot (400), comprises a gripping element (412) for grasping and moving the first holding device (100).

13. Arrangement according to one of claims 5 to 12, **characterized in that** the external drive, in particular the robot, comprises a picking-up device (413) for picking up a container (240) with a screw cap (140).

14. Arrangement according to claim 13, **characterized in that** the picking-up device (413) comprises a magnet for picking up the container (240) with the screw cap (140).

15. Method for activating a screw cap (140) of a container (240), in particular with a device (1) according to one of claims 1 to 4, wherein, by activation of a drive, a screw cap (140) is grasped by a first holding device (100), **characterized in that**, after the screw cap (140) is grasped a switchover device (112) for switching over the device (1) between a first configuration for opening and closing the first holding device (100) and a second configuration for setting the first holding device (100) into a rotational movement in order to achieve a separate activation of the two configurations, is switched wherewith the first holding device (100) is set into a rotational movement by means of the drive (114).

16. Method according to claim 15, wherein the first holding device (100) is moved because of the thread pitch of the screw cap (140) or of the container (240) in the direction of an axis of rotation of the first jaw chuck (120), which axis of rotation is defined by the rotational movement of the first holding device (100).

17. Method according to claim 15 or 16, wherein, during the activation of the screw cap (140), the container (240) is held by a second holding device (200).

18. Method according to one of claims 15 to 17, wherein the container (240) and/or the screw cap (140), in particular in the event of identification as a reject, is dropped through a central opening in the second holding device (200).

19. Method according to one of claims 15 to 18, wherein by using an arrangement according to one of claims 5 to 14, a first holding device (100) is moved by a robot (400), and then the screw cap (140) is grasped and activated by the first holding device (100).

## Revendications

1. Ensemble (1) destiné à actionner un couvercle fileté (140) d'un récipient (240), en particulier d'un récipient (240) destiné à être utilisé dans un appareil d'analyse chimique, l'ensemble présentant un premier ensemble de maintien (100) qui maintient le couvercle fileté (140) ainsi qu'un entraînement (114) qui actionne le premier ensemble de maintien (100), l'entraînement (114) permettant de déplacer en rotation le premier ensemble de maintien (100),
**caractérisé en ce que**
il comporte un ensemble de commutation (112) qui commute l'ensemble (1) entre une première configuration d'ouverture et de fermeture du premier ensemble de maintien (100) et une deuxième configuration qui amène le premier ensemble de maintien (100) dans un déplacement de rotation, une commande séparée des deux configuration étant obtenue à l'aide de l'ensemble de commutation (112).

2. Ensemble (1) selon la revendication 1, **caractérisé en ce qu'**il comporte un élément d'actionnement (130, 132, 133) qui actionne l'ensemble de maintien (100) et apte à tourner autour d'un axe de rotation de l'ensemble de maintien (100), une rotation de l'élément d'actionnement (130, 132, 133) pouvant être bloquée par l'ensemble de commutation (112) de telle sorte que l'ensemble de maintien (100) puisse être actionné par l'entraînement (114).

3. Ensemble (1) selon les revendications 1 ou 2, **caractérisé en ce que** l'ensemble de commutation (112) comporte un goujon (113) actionné magnétiquement pour bloquer la rotation de l'élément d'actionnement (130, 132, 133).

4. Ensemble (1) selon l'une des revendications 1 à 3, **caractérisé en ce que** l'entraînement (114) est configuré comme entraînement à courroie (114, 116) et de façon particulièrement préférable comme entraînement à courroie crantée.

5. Ensemble comprenant un ensemble (1) d'actionnement d'un couvercle fileté (140) et d'un récipient (240) selon l'une des revendications 1 à 4, **caractérisé en ce que** le système comporte en outre un entraînement externe, en particulier un robot (400), le premier ensemble de maintien (100) comportant un ensemble d'accouplement (303, 305) qui permet d'accoupler l'entraînement externe, le premier ensemble de maintien (100) pouvant être déplacé au moyen de l'entraînement externe.

6. Système selon la revendication 5, **caractérisé en ce que** le premier ensemble de maintien (100) peut être déplacé dans un plan (402, 404).

7. Système selon les revendications 5 ou 6, **caractérisé en ce que** le premier ensemble de maintien (100) peut être déplacé le long d'un premier axe et pivoter autour d'un deuxième axe.

8. Système selon l'une des revendications 5 à 7, **caractérisé en ce qu'**il comporte un deuxième ensemble de maintien (200) qui permet de saisir le récipient (240).

9. Système selon la revendication 8, **caractérisé en ce que** le premier et/ou le deuxième ensemble de maintien (100, 200) sont configurés comme mandrin à mâchoires et en particulier pour la reprise de couvercles filetés (140) de récipients respectifs (240) de différents diamètres.

10. Système selon les revendications 8 ou 9, **caractérisé en ce que** le premier et/ou le deuxième ensemble de maintien (100, 200) sont autobloquants.

11. Système selon l'une des revendications 8 à 10, **caractérisé en ce que** le deuxième ensemble de maintien (200) comporte une ouverture centrale (233) par laquelle un récipient (240) maintenu par le deuxième ensemble de maintien (200) peut tomber.

12. Système selon l'une des revendications 5 à 11, **caractérisé en ce que** l'entraînement externe, en particulier le robot (400), comporte un élément de saisie (412) qui saisit et déplace le premier ensemble de maintien (100) dans le plan.

13. Système selon l'une des revendications 5 à 12, **caractérisé en ce qu'**un entraînement externe, en particulier le robot, comporte un ensemble de reprise (413) qui reprend un récipient (240) doté d'un couvercle fileté (140).

14. Système selon la revendication 13, **caractérisé en ce que** l'ensemble de reprise (413) comporte un aimant qui reprend le récipient (240) doté du couvercle fileté (140).

15. Procédé d'actionnement d'un couvercle fileté (140) d'un récipient (240), en particulier à l'aide d'un dispositif (1) selon l'une des revendications 1 à 4, et dans lequel, par actionnement d'un entraînement (114), un couvercle fileté (140) est saisi par un premier ensemble de maintien (100),
**caractérisé en ce que**
après la saisie du couvercle fileté (140), un ensemble de commutation qui est prévu pour commuter l'ensemble (1) entre une première configuration d'ouverture et de fermeture du premier ensemble de maintien (100) et une deuxième configuration dans laquelle le premier ensemble de maintien (100) est amené dans un déplacement de rotation, de manière à obtenir une commande séparée des deux configurations, est commuté de telle sorte qu'au moyen de l'entraînement (114), le premier ensemble de maintien (100) soit amené dans un déplacement de rotation.

16. Procédé selon la revendication 15, dans lequel le premier ensemble de maintien (100) est déplacé dans la direction d'un axe de rotation, défini par le déplacement de rotation du premier ensemble de maintien (100), du premier mandrin à mâchoires (120), sur la base du pas du filet du couvercle fileté (140) ou du récipient (240).

17. Procédé selon les revendications 15 ou 16, dans lequel, pendant l'actionnement du couvercle fileté (140), le récipient (240) est maintenu par le deuxième ensemble de maintien (200).

18. Procédé selon l'une des revendications 15 à 17, dans lequel le récipient (240) et/ou le couvercle fileté (140), en particulier dans le cas de l'identification d'une marchandise à exclure, est amené à tomber par une ouverture centrale du deuxième ensemble de maintien (200).

19. Procédé selon l'une des revendications 15 à 18, dans lequel, par recours à un système selon l'une des revendications 5 à 14, avec un robot externe (400), un premier ensemble de maintien (100) est déplacé et ensuite le couvercle fileté (140) est saisi et actionné par le premier ensemble de maintien (100).
